# EUROPÄISCHE PATENTANMELDUNG

(11) **EP 0 860 830 A1**
(43) Veröffentlichungstag der Anmeldung: **26.08.1998**
(21) Anmeldenummer: 98102400.3
(22) Anmeldetag: 12.02.1998
(51) Int. Cl.: G11B 33/04

(54) **Tragschiene zur Halterung von Aufbewahrungsgegenständen**

(30) Priorität: 20.02.1997 DE 29703021 U
(71) Anmelder: Discher Sanitätstechnik GmbH, 42781 Haan (DE)
(72) Erfinder: Discher, Josef, D-42781 Haan (DE)
(74) Vertreter: Rieder, Hans-Joachim, Dr.

(57) **Zusammenfassung**

Die Erfindung bezieht sich auf eine mit übereinander angeordneten Einsteckschlitzen (1) ausgestattete Tragschiene (T) zur Halterung von Aufbewahrungsgegenständen, wobei die Einsteckschlitze (1) eine nach rückwärts der Tragschiene (T) abfallende Neigung und Tiefe besitzen, daß der Aufbewahrungsgegenstand (2) aufgrund seiner aus der Schwerkraft resultierenden Verkantung im Klemmsitz gehalten ist, wobei sich der Einsteckschlitz (1) über die Firstkante (7) zweier dachartig zueinander stehender Dachflächen (a,b) gehend erstreckt, und erzielt eine tragstabile, bestückungs- bzw. entnahmegünstige Ausgestaltung durch zwei parallel zueinander verlaufende Firstkanten (7,7) und in einer mittleren Kehle (8) zusammenstoßende innere Dachflächen (a,a), wobei sich der Einsteckschlitz (1) durchgehend über diese Flächen (a,b,a,b) erstreckt.

## Beschreibung

Die Erfindung bezieht sich auf eine mit übereinander angeordneten Einsteckschlitzen ausgestattete Tragschiene zur Halterung von Aufbewahrungsgegenständen, wobei die Einsteckschlitze eine nach rückwärts der Tragschiene hin abfallende Neigung und Tiefe besitzen, daß der Aufbewahrungsgegenstand aufgrund seiner aus der Schwerkraft resultierenden Verkantung im Klemmsitz gehalten ist, wobei sich der Steckschlitz über die Firstkante zweier dachartig zueinander stehender Dachflächen gehend erstreckt.

Die querschnittsbestimmende Dachform der Tragschiene und damit der sie querenden Einsteckschlitze ist an markterhältlichen CD-Ständern verwirklicht. Die Frontseite der geschlitzten Tragschiene oder des Ständers spitzt deutlich exponiert aus. So entsteht eine Dreipunktabstützung für den Aufbewahrungsgegenstand, hier also die CDs. Dokumentbezogen sei auf das deutsche Geschmacksmuster M 94 03 650, Geschmacksmusterblatt Heft 18 vom 24.09.1994, Teil 1a, verwiesen.

Darüber hinaus ist es an einem CD-Ständer bekannt, die Einsteckschlitze zum Einsetzen einer Einschubplatte zu nutzen (vergleiche deutsche Geschmacksmuster M 95 00 583 und M 95 00 585, Geschmacksmusterblatt Heft 20 vom 25.10.1995, Teil 1a). Beim letztgenannten Vorläufer ist die Einschubplatte in ihrem freiragenden Abschnitt in pultbildender Weise abgeschrägt. Dieser Bereich fungiert als Ablagefläche und endet in einer nach aufwärts abgewinkelten Stützleiste zur abrutschsicheren Festlegung aufgelegter Gegenstände.

In Kenntnis solcher Vorgaben hat sich die Erfindung die Aufgabe gestellt, eine gattungsgemäße Tragschiene bei gleicher Tragfähigkeit weniger ausladend zu gestalten und den Mittelflächenbereich des Aufbewahrungsgegenstandes flächenanteilmäßig stärker freizuhalten.

Diese Aufgabe ist zunächst und im wesentlichen bei einer mit übereinander angeordneten Einsteckschlitzen ausgestatteten Tragschiene zur Halterung von Aufbewahrungsgegenständen gelöst durch zwei parallel zueinander verlaufende Firstkanten und in einer mittleren Kehle zusammenstoßende Dachflächen, wobei sich der Einsteckschlitz durchgehend über diese Flächen erstreckt. Das gestattet einen stabilen Klemm-Verkantungs-Sitz bei deutlich minimierter Überdeckung der Fläche des Aufbewahrungsgegenstandes. Die auch hier wirkende Dreipunktabstützung ist günstiger. Der mittlere Stützpunkt liegt tief; die beiden seitlichen Stützpunkte sind frontal weniger exponiert. So entsteht auch kein Auslenkeffekt an Gegenständen mit weit ausladender Vorstandslänge. Es liegen durch die beiden "Dächer" zwei Niederhalter vor bzw. zwei Tragzentren. Hinzu kommt, daß sich, beibehaltend den Dachbegriff, hier praktisch eine Art Grabendach-Profil ergibt. Das hat vor allem bei einem gerundeten oder gewölbten Umriß aufweisenden Aufbewahrungsgegenständen den weiteren Vorteil der Nutzung einer Zuordnungszentrierung. Eine solche Vorzentrierung kann vor allen Dingen bei Gefäßen wie Steckhecken günstig sein. Die gleiten nach Durchlaufen der Zentrierzone bestens ausgewogen abstützpunktverteilt in den Einsteckschlitz ein. Abgesehen von einer auch im Grunde vorteilhaften stabilitätsfördernden Zickzackprofilierung der Tragschiene ergibt sich außer der geschilderten, besonders vorteilhaften Zentrierwirkung noch der Vorteil eines möglichst großen Breitenabstandes der frontalen Stützpunkte dadurch, daß die in der Kehle zusammenstoßenden inneren Dachflächen eine größere Breite aufweisen als die äußeren Dachflächen. Endlich ist es noch günstig, daß die Kehle jenseits der Verbindungslinie der Enden derjenigen Schlitze bzw. Schlitzabschnitte liegt, die in den äußeren Dachflächen angeordnet sind. Selbst geometrisch geradkantige Aufbewahrungsgegenstände oder entsprechende Abschnitte derselben, wie beispielsweise an Tabletts, lassen sich so trotz geringer Einstecktiefe sicher halten. Es sind dort nämlich zwei benachbarte Abstützpunkte erzielt.

Der Gegenstand der Erfindung ist nachstehend anhand eines zeichnerisch veranschaulichten Ausführungsbeispieles näher erläutert. Es zeigt:
- Fig. 1: die Tragschiene in Vorderansicht,
- Fig. 2: dieselbe in Seitenansicht,
- Fig. 3: die Tragschiene in Rückansicht,
- Fig. 4: die Draufsicht auf Figur 1,

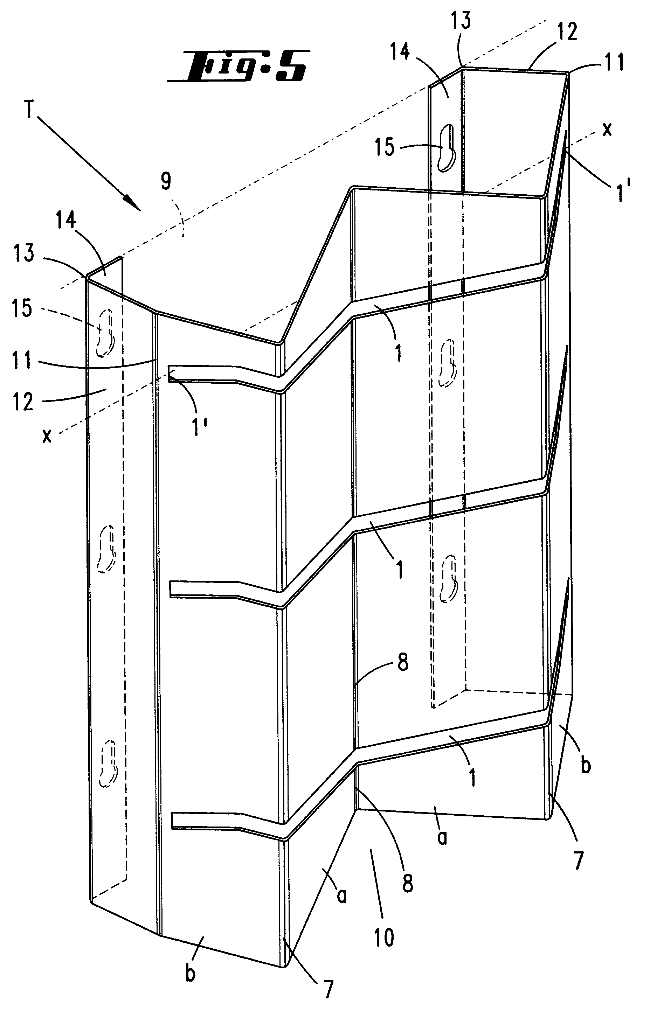

- Fig. 5: einen Abschnitt der Tragschiene in perspektivischer Darstellung,
- Fig. 6: den Ebenenzuschnitt der Tragschiene mit benachbarten gleichgestalteten Abschnitten, letztere in strichpunktierter Linienart wiedergegeben,
- Fig. 7: ein erstes Benutzungsbeispiel der Tragschiene, letztere im Vertikalschnitt wiedergegeben,
- Fig. 8: die Draufsicht auf Figur 7,
- Fig. 9: ein zweites Bestückungsbeispiel der Tragschiene, und zwar in Seitenansicht und
- Fig. 10: die Draufsicht auf Figur 9.

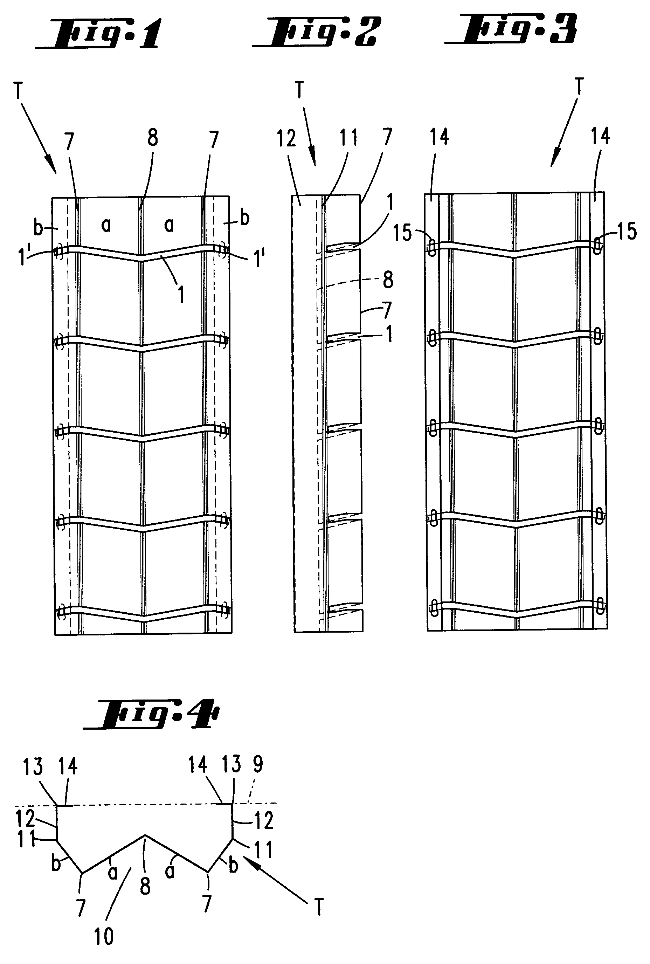

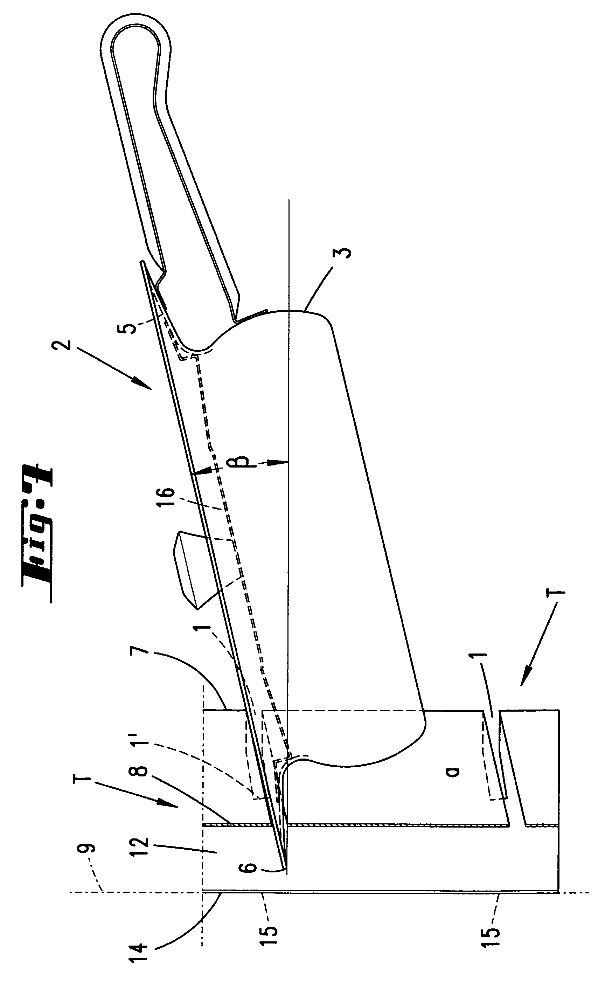

Die aus einem Stahlblechabschnitt freigestanzte und in die aus Figur 4 ersichtliche Querschnittsform gefaltete Tragschiene T weist übereinander angeordnete, quer zur Schienenerstreckung liegende Einsteckschlitze 1 auf. Letztere dienen zur Halterung in den Figuren 7,8 und 9,10 dargestellter Aufbewahrungsgegenstände 2.

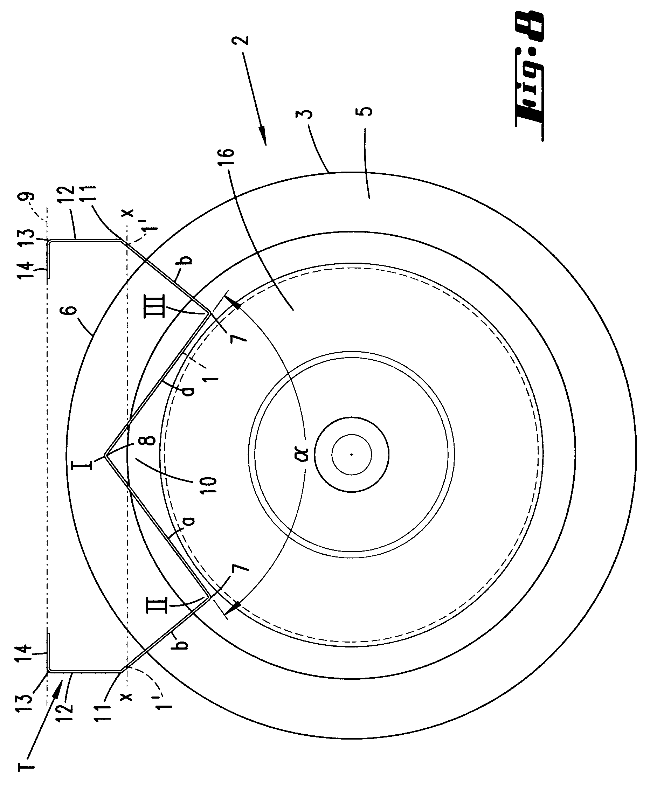

Beim in den Figuren 7 und 8 dargestellten Aufbewahrungsgegenstand handelt es sich um ein deckelverschließbares Gefäß in Form eines Steckbeckens 3.

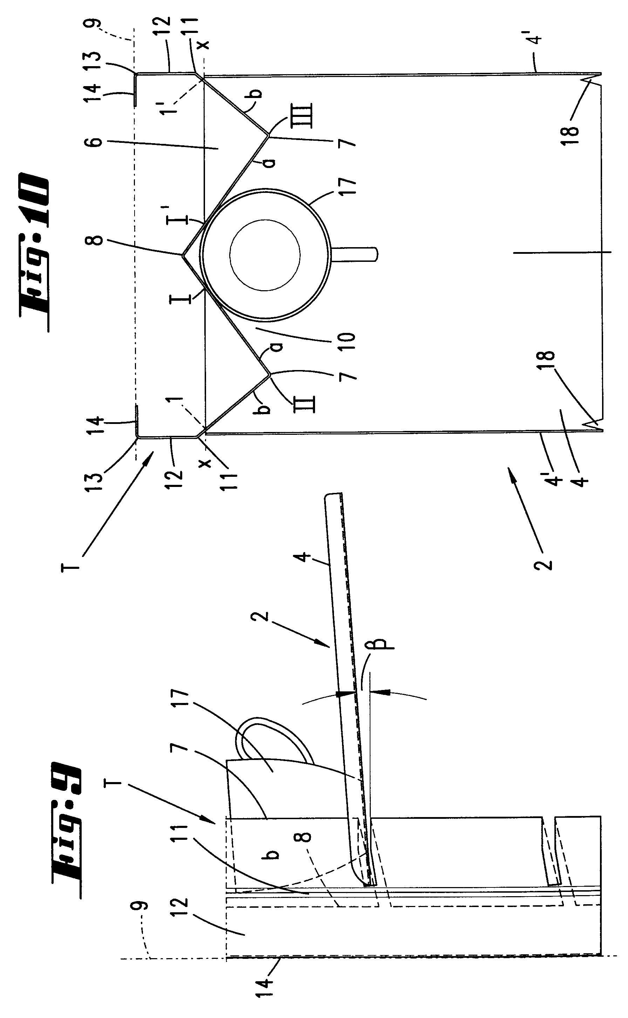

Gemäß Figuren 9 und 10 ist der Aufbewahrungsgegenstand 2 ein Tablett 4. Das weist rechteckigen Grundriß auf.

Grundrißbestimmend für den anderen Aufnahmegegenstand 2, das Steckbecken 3 also, ist die Kreisform. Typisch ist dort eine leicht getrichterte, relativ breite Ringfläche 5 des Gefäßrandes. Zumindest der einsteckende Abschnitt des Randes 6 verläuft in einer geraden Ebene, etwa einem Hutrand vergleichbar. Entsprechendes gilt ebenflächemäßig für den einsteckenden Abschnitt des Randes 6 des Tabletts 4.

Der frontale Bereich der Tragschiene T ist richtungswechselnd profiliert. Es liegt eine doppeldachartige Silhouette vor. Jedes Dach hat zwei geneigt zueinander verlaufende Dachflächen, vergleichbar einem Sattel- oder Giebeldach.

Die hier vertikal verlaufenden Firstkanten der beiden Dächer sind mit 7 bezeichnet. Sie nehmen über die ganze Länge der vertikal angeschlagenen Tragschienen T einen parallelen Verlauf.

Beide Dächer lassen zwischen sich eine Kehle 8. Die liegt mittig. Ihr Kehlengrund liegt einer vertikalen Befestigungsebene 9 der Tragscheine T näher als die beiden Firstkanten 7. Die weisen untereinander einen gleichen räumlichen Abstand zur Befestigungsebene 9 auf. Letztere kann eine Wand sein.

Die wie ein breites Kerbtal aussehende Kehle 8 formt eine Zentrierrinne 10. Diesbezüglich form- oder profilbestimmend sind zwei innere Dachflächen a,a der benachbarten Dächer. Die inneren Dachflächen a,a schließen zwischen sich einen frontal öffnenden, stumpfen Winkel Alpha ein; der liegt bei ca. 130°.

Die nach außen abfallenden Dachflächen b sind steiler gestellt, nahezu einem Sheddach vergleichbar, und gehen über traufseitige Faltscheitel 11 in relativ kurze Seitenwangen 12 der Tragschiene T über. Die Seitenwangen 12 verlaufen parallel zueinander.

Die Seitenwangen 12 setzen sich über eine Faltkante 13 sodann in rechtwinklig gegeneinander gerichtet abgewinkelte Tragleisten 14 fort. Die weisen Schlüssellöcher 15 auf. Die Schlüssellöcher 15 dienen in bekannter Weise zum Durchtritt kopfverdickter Befestigungselemente, wie beispielsweise Schrauben. Die sitzen in wandseitig angeordneten Dübeln.

Die in der Kehle 8 zusammenstoßenden inneren Dachflächen a,a weisen eine größere horizontale Breite auf als die beiden äußeren Dachflächen b,b der beiden Dächer. Die äußeren Dachflächen b,b sind etwa halb so breit wie die inneren Dachflächen a,a.

Die übereinander angeordneten Einsteckschlitze 11 befinden sich, kehlenübergreifend, in den beiden gegeneinanderstoßenden inneren Dachflächen a,a und, firstkantentrennend, auch in den beiden äußeren Dachflächen b,b. Sie enden dort kurz vor dem jeweiligen Faltscheitel 11.

Die Tiefe der die Kehle 8 schaffenden Einfaltung in Richtung der Befestigungsebene 9 und der Ansatz der äußeren Dachflächen b,b ist in Bezug auf die Erstreckung des Einsteckschlitzes 1 so gewählt, daß die Kehle 8 jenseits einer Verbindungslinie x-x der Enden 1',1' derjenigen Einsteckschlitze 1, genauer Schlitzabschnitte liegt, die in den äußeren Dachflächen b,b angeordnet sind.

Das bedeutet für einen geradlinig verlaufenden Rand 6, wie er beim im Umriß rechteckigen Tablett 4 vorliegt, eine relativ kurze Stecktiefe, eben begrenzt durch die besagten Enden 1',1'. Hierbei ergeben sich für die gesamte Zickzackstruktur insgesamt zwei der Kehle 8 bzw. dem Kehlengrund naheliegende Abstützpunkte I und I' und im Bereich der Firstkanten 7 insgesamt zwei weitere Abstützpunkte II und III. Letztere erstrecken sich maximal quer beabstandet.

Die beiden erstgenannten Abstützpunkte I und I' liegen unter Berücksichtigung der Hanglast des frontal frei kragenden Aufnahmegegenstandes 2 an der Oberkante des Einsteckschlitzes 1, wohingegen die beiden weiteren Abstützpunkte II und III an der Unterkante des Einsteckschlitzes 1 gebildet werden. Dies und die Tatsache, daß die Einsteckschlitze 1 sämtlich eine nach rückwärts der Tragschiene T hin abfallende Neigung und in diese Richtung gehende Tiefe besitzen, führt zu dem auch hier sicher erreichten Halt des Aufbewahrungsgegentandes 2. Der Anstellwinkel Beta der eingesteckten Aufbewahrungsgegenstände 2 liegt in einem selbstsperrenden Bereich von ca. 5° bis 10°.

Bei dem in Figur 8 und 9 wiedergegebenen Aufnahmegegenstand 2 handelt es sich, wie schon angedeutet, um einen solchen mit kreisrundem Rand 6. Der einsteckende Abschnitt dieses Randes 6 kann tiefer in das Innere der Tragschiene T reichen, und zwar schlitzlängenbedingt und durchmessernutzend so, daß dort der vom Kehlenbereich gestellte Abstützpunkt 8 jenseits der Verbindungslinie x-x erzielt ist, also in engerer Nachbarschaft zur Befestigungsebene 9 liegt. Dieser Abstützpunkt ist mit I bezeichnet.

Die beiden anderen, räumlich weit voneinander beabstandeten Abstützpunkte II und III liegen wiederum im Bereich der Firstkanten 7,7.

Wie Figur 8 entnehmbar, reicht der Rand 6 der Ringfläche 5 des Steckbeckens 3 nicht bis zu den Enden 1',1' des Einsteckschlitzes 1. Er kann hier demzufolge auch nicht durch Berührung mit etwaigen Schlitzgraten aufgerauht werden. Es findet vielmehr eine vorrangige Abstützung am gefäßbildenden unteren Abschnitts des Steckbeckens 3 sprich Topfwandung statt. Diese Wandung stützt sich nämlich an den inneren Dachflächen a,a ab, bildend die Zentrierrinne 10.

Zum Zwecke des Einhängens des Steckbeckens 3 braucht der Handhabende also lediglich grob den in aller Regel griffabgewandten Bereich des Randes 6 in die Zentrierrinne 10 einzuführen. Der Aufbewahrungsgegenstand 2 wird dabei zwangsgeführt in eine mittige, d.h. symmetrische Einführbereitschaftslage gebracht. Durch nach oben oder nach unten gerichtetes Fahren des Steckbeckens 3 läßt sich dessen Rand 6 dann zielgerichtet und abstützpunktverteilt einführen.

Wie Figur 8 überdies noch entnehmbar, nehmen die Firstkanten 7,7 eine so ausreichend exponierte Lage ein, daß sie den Deckel 16 des Gefäßes niederhaltend überfangen.

Eine gebrauchsvorteilhafte Wirkung ist hinsichtlich der Variante gemäß Figuren 9 und 10 anzugeben: Dort ist ein Gefäß aufgrund der abschüssigen Lage des dortigen Tabletts 4 in die Zentrierrinne 10 gerutscht. Auf diese Weise läßt sich auch der tragschienennahe Randbereich des Tabletts 4 als Stellfläche gut nutzen.

Der äußere Schlitzabschnitt, realisiert in den äußeren Dachflächen b,b, kann leicht stumpfwinklig gebrochen sein (siehe Figur 9). Der diesbezügliche Scheitel liegt etwa auf halber Länge des Schlitzabschnitts.

Die dargestellte Tragschiene T läßt sich auch als Bestandteil einer Tragsäule nutzen, die beispielsweise aus mehreren, zu einem geschlossenen Ring vereinigten einzelnen Tragschienen T besteht. Ein solcher Ständer kann verfahrbar ausgerüstet sein, also Bodenrollen aufweisen.

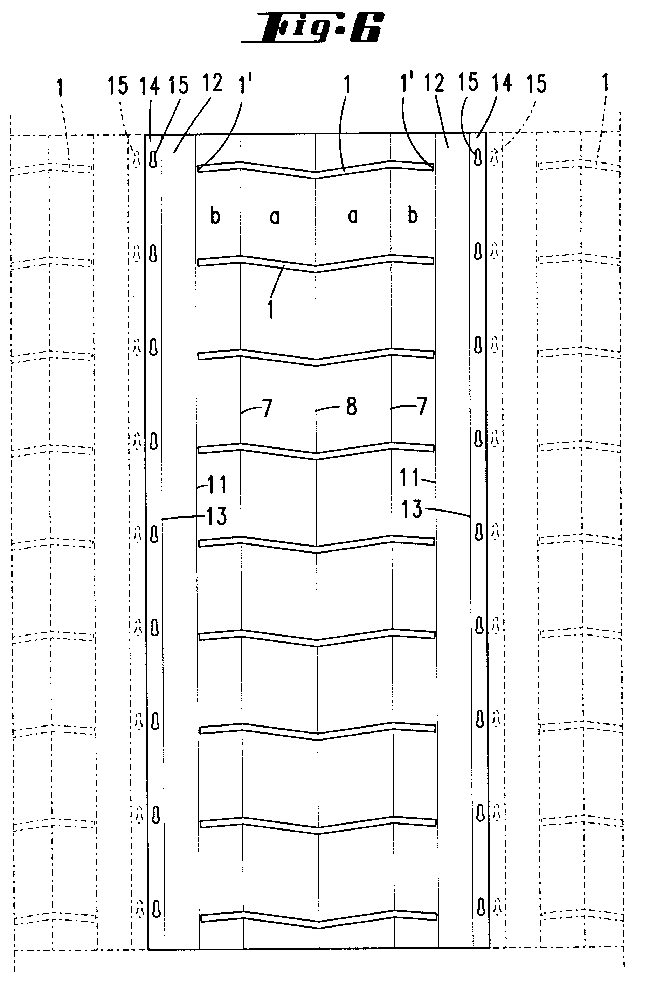

Figur 6 zeigt den Zuschnitt einer die Tragschiene T bildenden Platine. Die eingetragenen Vertikallinien zeigen die die querschnitts-w-förmige Zickzackstruktur bildenden Faltstellen an, auch die der Seitenwangen 12 und der beiden Tragleisten 14.

Die Einsteckschlitze 1 und die Schlüssellöcher 15 werden gemeinsam ausgestanzt. Über einen Schrittvorschub unter Beiziehung einer Schneideinrichtung läßt sich die Produktion weitestgehend automatisieren. Das gilt auch für das geschilderte Falten über ein Folgewerkzeug.

Die in Steckrichtung liegenden, parallelen Längsseitenränder des Tabletts 4 sind nach oben abgewinkelt zu Randleisten 4'. Die Schmalseiten verbleiben diesbezüglich in der Bodenebene des Tabletts. Eine oder beide Schmalseiten können Steckkerben aufweisen. Diese umgreifen die vertikalen Ränder der Einsteckschlitz-Enden 1'. Die Steckkerben 18 liegen nahe des Fußes der Randleisten 4' und wirken zentrierend und damit gegen Seitenverschub der Tabletts 4 mit sperrend.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Mit übereinander angeordneten Einsteckschlitzen (1) ausgestattete Tragschiene (T) zur Halterung von Aufbewahrungsgegenständen (2), wobei die Einsteckschlitze (1) eine nach rückwärts der Tragschiene (T) abfallende Neigung und Tiefe besitzen, daß der Aufbewahrungsgegenstand (2) aufgrund seiner aus der Schwerkraft resultierenden Verkantung im Klemmsitz gehalten ist, wobei sich der Einsteckschlitz (1) über die Firstkante (7) zweier dachartig zueinander stehender Dachflächen (a,b) gehend erstreckt, gekennzeichnet durch zwei parallel zueinander verlaufende Firstkanten (7,7) und in einer mittleren Kehle (8) zusammenstoßende innere Dachflächen (a,a), wobei sich der Einsteckschlitz (1) durchgehend über diese Flächen (a,b,a,b) erstreckt.

2. Tragschiene nach Anspruch 1 oder insbesondere danach, dadurch gekennzeichnet, daß die in der Kehle (8) zusammenstoßenden inneren Dachflächen (a,a) eine größere Breite aufweisen als die beiden äußeren Dachflächen (b,b).

3. Tragschiene nach einem oder mehreren der vorhergehenden Ansprüche oder insbesondere danach, dadurch gekennzeichnet, daß die Kehle (8) jenseits einer Verbindungslinie (x-x) der Enden (1',1') derjenigen Schlitze bzw. Schlitzabschnitte liegt, die in den äußeren Dachflächen (b,b) angeordnet sind.
